(19) **Europäisches Patentamt / European Patent Office / Office européen des brevets**

(11) **EP 1 034 433 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **99915501.3**

(22) Anmeldetag: **06.03.1999**

(51) Int Cl.:
*G01P 15/00* (2006.01)    *B60T 8/00* (2006.01)

(86) Internationale Anmeldenummer:
**PCT/DE1999/000596**

(87) Internationale Veröffentlichungsnummer:
**WO 1999/046604 (16.09.1999 Gazette 1999/37)**

(54) **VERFAHREN UND VORRICHTUNG ZUR ERZEUGUNG EINES FAHRZUSTANDSSIGNALS BEI EINEM KRAFTFAHRZEUG**

METHOD AND DEVICE FOR PRODUCING A SIGNAL REPRESENTING A MOTOR VEHICLE RUNNING CONDITIONS

PROCEDE ET DISPOSITIF DE PRODUCTION D'UN SIGNAL DE CONDITIONS DE MARCHE D'UN VEHICULE

(84) Benannte Vertragsstaaten:
**DE FR GB**

(30) Priorität: **10.03.1998 DE 19810213**

(43) Veröffentlichungstag der Anmeldung:
**13.09.2000 Patentblatt 2000/37**

(73) Patentinhaber: **ROBERT BOSCH GMBH
70442 Stuttgart (DE)**

(72) Erfinder:
• **HECKMANN, Hans
D-76227 Karlsruhe (DE)**
• **WINNER, Hermann
D-76229 Karlsruhe (DE)**

(56) Entgegenhaltungen:
EP-A- 0 583 988     DE-A- 3 342 553
DE-A- 3 821 281     US-A- 5 579 230

• **PATENT ABSTRACTS OF JAPAN vol. 095, no. 004, 31. Mai 1995 (1995-05-31) & JP 07 012563 A (RAILWAY TECHNICAL RES INST), 17. Januar 1995 (1995-01-17)**

EP 1 034 433 B1

**Beschreibung**

Stand der Technik

Die Erfindung betrifft ein Verfahren beziehungsweise eine Vorrichtung zur Erzeugung eines Fahrzustandssignals bei einem Kraftfahrzeug mit den Merkmalen der Ansprüche 1 beziehungsweise 6.

Daten, die die Beschleunigung des Fahrzeugs relativ zur Fahrbahn, also die Beschleunigung über Grund, repräsentieren, werden beispielsweise in der Abstands- und Geschwindigkeitsregelung in Fahrzeugkolonnen benötigt. Dort wird in Abhängigkeit von der Fahrzeuggeschwindigkeit und dem Abstand zum vorausfahrenden Fahrzeug die Verzögerung, mit der das Fahrzeug gebremst werden muß, um den Abstand konstant zu halten, berechnet.

Weiterhin wird die Beschleunigung über Grund und die Kräfte, die durch eine in Längsrichtung geneigte Fahrbahn verursacht werden, bei der Bremsenregelung, beispielsweise bei der elektromotorische Bremse oder bei der elektrohydraulischen Bremse, eingesetzt.

Bei heutigen Fahrzeugen, insbesondere mit Antiblockier-, Antriebsschlupf- und/oder Fahrdynamikregelsystemen ist es bekannt, die Drehgeschwindigkeit der Räder, die Raddrehzahlen, sensorisch zu erfassen. Durch zeitliches Differenzieren kann zwar im Prinzip die Beschleunigung des Fahrzeugs relativ zur Fahrbahn, also die Beschleunigung über Grund, ermittelt werden. Hierbei ergeben sich aber dann Probleme, wenn die Räder einen gewissen Radschlupf (Antriebs- oder Bremsschlupf) aufweisen. Darüber hinaus ist die Ermittlung der Beschleunigung über Grund allein aus den Raddrehzahlen nicht schnell genug.

Ist ein Längsbeschleunigungssensor am oder im Fahrzeug vorhanden, so ist dieser bei der Erfassung der Fahrzeugbeschleunigung schnell und im wesentlichen linear mit der momentan wirkenden Bremskraft. Der Längsbeschleunigungssensor hat aber den Nachteil, daß er die Beschleunigung über Grund noch mit dem Hangabtrieb verknüpft. Der Sensor mißt also zusätzlich zur gewünschten Beschleunigung $a\_üGr$ über Grund noch Beschleunigungsanteile $g*\sin\alpha$, die durch eine in Längsrichtung geneigte Fahrbahn (Neigung $\alpha$) verursacht werden:

$$a\_Sen = a\_üGr + g*\sin\alpha$$

Die Aufgabe der vorliegenden Erfindung besteht darin, in einfacher Weise die Beschleunigung über Grund zu ermöglichen.

Diese Aufgabe wird durch die Merkmale der unabhängigen Ansprüche gelöst.

Vorteile der Erfindung

Wie schon erwähnt geht die Erfindung aus von einem Verfahren beziehungsweise einer Vorrichtung zur Erzeugung eines Fahrzustandssignals, das den Fahrzustand eines Kraftfahrzeugs repräsentiert. Erfindungsgemäß wird eine die Beschleunigung der Fahrzeugräder repräsentierende Radbeschleunigungsgröße gebildet. Weiterhin wird eine die Längsbeschleunigung des Fahrzeugs repräsentierende Beschleunigungsgröße sensorisch erfaßt. Der Kern der Erfindung besteht darin, daß die gebildete Radbeschleunigungsgröße tiefpaßgefiltert und die erfaßte Beschleunigungsgröße hochpaßgefiltert wird und das Fahrzustandssignal in Abhängigkeit von einer Verknüpfung der tiefpaßgefilterten Radbeschleunigungsgröße und der hochpaßgefilterten Beschleunigungsgröße erzeugt wird.

Durch die Erfindung ist es möglich, aus der Kombination der Signale eines Beschleunigungssensors und den Raddrehzahlsignalen die Fahrzeugbeschleunigung über Grund zu ermitteln. Die erfindungsgemäße Kombination der beiden Signale ist erforderlich, um die eingangs erwähnten Nachteile der Einzelsensoren ausgleichen zu können.

Insbesondere ist vorgesehen, daß das Fahrzustandssignal in Abhängigkeit von einer additiven Verknüpfung der tiefpaßgefilterten Radbeschleunigungsgröße und der hochpaßgefilterten Beschleunigungsgröße erzeugt wird. Durch die erfindungsgemäße Filterung mit anschließender Addition beider gefilterter Signale kann ein Signal erzeugt werden, das die Beschleunigung über Grund richtig angibt.

In einer besonders bevorzugten Ausgestaltung der Erfindung ist vorgesehen, daß die Tiefpaß- und Hochpaßfilterung mit der gleichen Zeitkonstanten geschieht.

Wie schon eingangs erwähnt ist es besonders vorteilhaft, das erzeugte Fahrzustandssignal zur Regelung und/oder Steuerung der Bremsen des Fahrzeugs und/oder zur Abstands- und/oder Geschwindigkeitsregelung heranzuziehen.

Insbesondere repräsentiert das erzeugte Fahrzustandssignal die Beschleunigung des Fahrzeugs relativ zur Fahrbahn, auf der sich das Fahrzeugs bewegt.

Weitere vorteilhafte Ausgestaltungen sind den Unteransprüchen zu entnehmen.

Zeichnungen

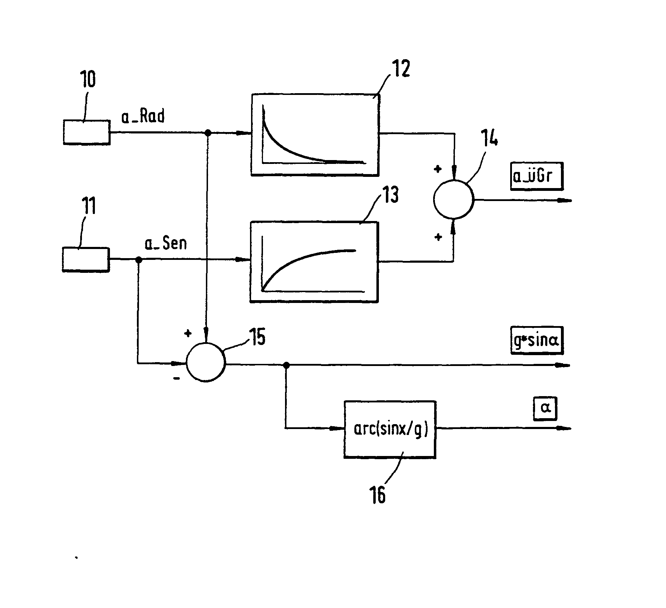

Die Figur zeigt ein Ausführungsbeispiel der Erfindung anhand eines Blockschaltbildes.

Ausführungsbeispiel

Im folgenden soll die Erfindung anhand des in der Figur dargestellten Ausführungsbeispiels dargestellt werden.

Ein im Fahrzeug installierter Beschleunigungssensor 11 mißt die Längsbeschleunigung a_Sen des Fahrzeugs. Aus den Raddrehzahlsignalen wird die (Radumfangs-)Beschleunigung a_Rad der Fahrzeugräder durch zeitliches Differenzieren berechnet (Ausgangssignal des Blocks 10).

Das Signal a_Sen des Beschleunigungssensors 11 wird in einem Hochpaßfilter 13 mit der Zeitkonstanten T zu dem hochpaßgefilterten Signal HP(a_Sen) gefiltert.

Das Radbeschleunigungssignal a_Rad, das auf die Raddrehzahlen zurückgeht, wird mittels eines Tiepaßfilters 12 mit der gleichen Zeitkonstanten T zu dem tiefpaßgefilterten Signal TP(a_Rad) gefiltert.

Die so gefilterten Signale werden im Verknüpfungspunkt 14 addiert zur Größe a_üGr, die die Beschleunigung des Fahrzeugs relativ zur Fahrbahn, die Beschleunigung über Grund, repräsentiert.

$$\texttt{a\_üGr = HP(a\_Sen) + TP(a\_Rad)}$$

Das Ergebnis a_üGr ist eine schnelle Bestimmung der Beschleunigung über Grund ohne den Einfluß der Fahrbahnsteigung.

Die Information über die Fahrbahnsteigung $\alpha$ beziehungsweise über die Beschleunigungs- bzw. Verzögerungsanteile x=g*sin$\alpha$, die durch die Fahrbahnneigung verursacht werden, ist vor den Filtern 12 und 13 vorhanden und kann nach Bedarf durch eine Differenzbildung 15 und gegebenenfalls anschließender Bearbeitung durch den Block 16

$$\alpha = \text{arc}\left(\sin\frac{x}{g}\right)$$

berechnet werden.

**Patentansprüche**

1. Verfahren zur Erzeugung eines Fahrzustandssignals (a_üGr), das den Fahrzustand eines Kraftfahrzeugs repräsentiert, wobei

 - eine die Beschleunigung der Fahrzeugräder repräsentierende Radbeschleunigungsgröße (a_Rad) gebildet wird,
 - eine die Längsbeschleunigung des Fahrzeugs repräsentierende Beschleunigungsgröße (a_Sen) sensorisch erfaßt wird,
 - die gebildete Radbeschleunigungsgröße (a_Rad) tiefpaßgefiltert und die erfaßte Beschleunigungsgröße (a_Sen) hochpaßgefiltert wird und
 - das Fahrzustandssignal (a_üGr) in Abhängigkeit von einer Verknüpfung der tiefpaßgefilterten Radbeschleunigungsgröße und der hochpaßgefilterten Beschleunigungsgröße erzeugt wird, wobei das erzeugte Fahrzustandssignal (a_üGr) die Beschleunigung des Fahrzeugs relativ zur Fahrbahn, auf der sich das Fahrzeugs bewegt, repräsentiert, **dadurch gekennzeichnet, dass** das Fahrzustandssignal (a_üGr) in Abhängigkeit von einer additiven Verknüpfung der tiefpaßgefilterten Radbeschleunigungsgröße und der hochpaßgefilterten Beschleunigungsgröße erzeugt wird.

2. Verfahren nach Anspruch 1, **dadurch gekennzeichnet, daß** die Tiefpaß- und Hochpaßfilterung mit der gleichen Zeitkonstanten geschieht.

3. Verfahren nach Anspruch 1, **dadurch gekennzeichnet, daß** das erzeugte Fahrzustandssignal (a_üGr) zur Regelung und/oder Steuerung der Bremsen des Fahrzeugs und/oder zur Abstands- und/oder Geschwindigkeitsregelung herangezogen wird.

4. Vorrichtung zur Erzeugung eines Fahrzustandssignals (a_üGr), das den Fahrzustand eines Kraftfahrzeugs repräsentiert, aufweisend

 - einen Raddrehzahlsensor (10), der aus der Raddrehzahl durch zeitliches Differenzieren eine die Beschleunigung der Fahrzeugräder repräsentierende Radbeschleunigungsgröße (a_Rad) bildet und ausgibt,
 - einen Beschleunigungssensor (11), der die Längsbeschleunigung des Fahrzeugs sensorisch erfaßt und eine die Längsbeschleunigung des Fahrzeugs repräsentierende Beschleunigungsgröße (a_Sen) ausgibt,
 - ein Tiefpaßfilter (12), dem die gebildete Radbeschleunigungsgröße (a_Rad) zugeführt wird und ein Hochpaßfilter (13), dem die erfaßte Längsbeschleunigungsgröße (a_Sen) zugeführt wird und
 - eine Verknüpfungseinrichtung (14), der die tiefpaßgefilterte Radbeschleunigungsgröße und die hochpaßgefilterte Beschleunigungsgröße zugeführt werden und in der in Abhängigkeit von der Verknüpfung das Fahrzustandssignal (a_üGr) erzeugt wird,

 wobei die Vorrichtung derart ausgebildet ist, daß das erzeugte Fahrzustandssignal (a_üGr) die Beschleunigung des Fahrzeugs relativ zur Fahrbahn, auf der sich das Fahrzeugs bewegt, repräsentiert, **dadurch gekennzeichnet, daß** die Verknüpfungseinrichtung (14), die das Fahrzustandssignal (a_üGr) in Abhängigkeit der tiefpaßgefilterten Radbeschleunigungsgröße und der hochpaßgefilterten Beschleunigungsgröße erzeugt, eine additive Verknüpfungseinrichtung ist.

5. Vorrichtung nach Anspruch 4, **dadurch gekennzeichnet, daß** das Teifpaßfilter (12) und das Hochpaßfilter (13) mit der gleichen Zeitkonstanten (T) filtern.

6. Vorrichtung nach Anspruch 4, **dadurch gekennzeichnet, daß** das von der Verknüpfungseinrichtung (14) erzeugte und ausgegebene Fahrzustandssignal (a_üGr) einer Regelung und/oder Steuerung der Bremsen des Fahrzeugs zugeführt wird.

## Claims

1. Method for producing a running conditions signal (a_üGr) which represents the running conditions of a motor vehicle, wherein

    - a wheel acceleration variable (a_Rad) which represents the acceleration of the vehicle wheels is formed,
    - an acceleration variable (a_Sen) which represents the longitudinal acceleration of the vehicle is determined by sensor,
    - the wheel acceleration variable (a_Rad) which is formed is low-pass filtered and the acceleration variable (a_Sen) which is acquired is high-pass filtered, and
    - the running conditions signal (a_üGr) is produced as a function of a logic combination of the low-pass-filtered wheel acceleration variable and the high-pass-filtered acceleration variable, wherein the running conditions signal (a_üGr) which is produced represents the acceleration of the vehicle relative to the carriageway on which the vehicle is moving, **characterized in that** the running conditions signal (a_üGr) is produced as a function of an additive logic combination of the low-pass-filtered wheel acceleration variable and the high-pass-filtered acceleration variable.

2. Method according to Claim 1, **characterized in that** the low-pass filtering and the high-pass filtering are carried out with the same time constant.

3. Method according to Claim 1, **characterized in that** the running conditions signal (a_üGr) which is produced is used to perform a closed-loop and/or open-loop control of the brakes of the vehicle and/or for controlling the inter-vehicle distance and/or velocity.

4. Device for producing a running conditions signal (a_üGr) which represents the running conditions of a motor vehicle, having

    - a wheel speed sensor (10) which forms, from the wheel speed by means of differentiation over time, a wheel acceleration variable (a_Rad) which represents the acceleration of the vehicle wheels, and outputs said wheel acceleration variable (a_Rad),
    - an acceleration sensor (11) which acquires the longitudinal acceleration of the vehicle by sensor and outputs an acceleration variable (a_Sen) which represents the longitudinal acceleration of the vehicle,
    - a low-pass filter (12) to which the wheel acceleration variable (a_Rad) which is formed is fed, and a high-pass filter (13) to which the acquired longitudinal acceleration variable (a_Sen) is fed, and
    - a logic combination device (14) to which the low-pass-filtered wheel acceleration variable and the high-pass-filtered acceleration variable are fed and in which the running conditions signal (a_uGr) is produced as a function of the logic combination,

    wherein the device is embodied in such a way that the running conditions signal (a_uGr) which is produced represents the acceleration of the vehicle relative to the carriageway on which the vehicle is moving, **characterized in that** the logic combination device (14) which produces the running conditions signal (a_üGr) as a function of the low-pass-filtered wheel acceleration variable and the high-pass-filtered acceleration variable is an additive logic combination device.

5. Device according to Claim 4, **characterized in that** the low-pass filter (12) and the high-pass filter (13) filter with the same time constant (T).

6. Device according to Claim 4, **characterized in that** the running conditions signal (a_üGr) which is produced and output by the logic combination device (14) is fed to a closed-loop and/or open-loop controller for the brakes of the vehicle.

## Revendications

1. Procédé pour générer un signal d'état de conduite (a_üGr) représentant l'état de conduite d'un véhicule automobile selon lequel,

    - on forme une grandeur d'accélération de roue (a_Rad) représentant l'accélération des roues du véhicule,
    - on saisit par capteur une grandeur d'accélération (a_Sen) représentant l'accélération longitudinale du véhicule,

- on filtre par un filtre passe-bas la grandeur d'accélération de roue obtenue (a_Rad) et on filtre par un filtre passe-haut, la grandeur d'accélération (a_Sen), saisie, et

- on génère le signal d'état de conduite (a_üGr) en fonction d'une combinaison de la grandeur d'accélération de roue filtrée par un filtre passe-bas et de la grandeur d'accélération de roue filtrée par un filtre passe-haut, le signal d'état de conduite (a_üGr), formé, représentant l'accélération du véhicule par rapport à la chaussée sur laquelle le véhicule se déplace,

**caractérisé en ce qu'**

on génère le signal d'état de conduite (a_üGr) en fonction d'une combinaison additive de la grandeur d'accélération de roue filtrée par un filtre passe-bas et de la grandeur d'accélération de roue filtrée par un filtre passe-haut.

2. Procédé selon la revendication 1,
**caractérisé en ce qu'**
on fait le filtrage passe-bas et le filtrage passe-haut avec les mêmes constantes de temps.

3. Procédé selon la revendication 1,
**caractérisé en ce qu'**
on utilise le signal d'état de conduite (a_üGr) pour réguler et/ou pour commander le freinage du véhicule et/ ou pour réguler la distance et/ou la vitesse.

4. Dispositif pour générer un signal d'état de conduite (a_üGr) représentant l'état de conduite d'un véhicule automobile comprenant: :

   - un capteur de vitesse de rotation de roue (10) qui, partant de la vitesse de rotation de roue, forme par différentiation en fonction du temps, une grandeur d'accélération de roue (a_Rad) représentant l'accélération des roues du véhicule et il fournit cette grandeur,

   - un capteur d'accélération (11) qui saisit par capteur l'accélération longitudinale du véhicule et fournit une grandeur d'accélération (a_Sen) représentant l'accélération longitudinale du véhicule,

   - un filtre passe-bas (12) qui reçoit la grandeur d'accélération de roue (a_Rad), formée et l'applique à un filtre passe-haut (13) qui reçoit la grandeur d'accélération longitudinale saisie (a_Sen), et

   - une installation de combinaison (14) qui reçoit la grandeur d'accélération de roue filtrée par un filtre passe-bas et la grandeur d'accélération de roue filtrée par un filtre passe-haut, et en fonction de

la combinaison, il génère le signal d'état de conduite (a_üGr), le dispositif étant réalisé pour que le signal d'état de conduite (a_üGr) représente l'accélération du véhicule par rapport à la chaussée sur laquelle se déplace le véhicule,
**caractérisé en ce que**
l'installation de combinaison (14) est une installation de combinaison additive qui génère le signal d'état de conduite (a_üGr) en fonction de la grandeur d'accélération de roue filtrée par un filtre passe-bas et de la grandeur d'accélération de roue filtrée par un filtre passe-haut.

5. Dispositif selon la revendication 4,
**caractérisé en ce que**
le filtre passe-bas (12) et le filtre passe-haut (13) filtrent avec la même constante de temps (T).

6. Dispositif selon la revendication 4,
**caractérisé en ce que**
le signal d'état de conduite (a_üGr) généré par l'installation de combinaison (14) et émis par celle-ci, est appliqué à une régulation et/ou commande des freins du véhicule.